# EUROPEAN PATENT APPLICATION

(11) **EP 0 699 512 A1**
(43) Date of publication of application: **06.03.1996**
(21) Application number: 95113717.3
(22) Date of filing: 31.08.1995
(51) Int. Cl.: B29C 45/27

(54) **Liquid silicon rubber injection moulding machine**

(30) Priority: 01.09.1994 GB 9417568
(71) Applicant: THE WHITAKER CORPORATION, Wilmington, Delaware 19808 (US)
(72) Inventor: Grenda, Dietmar, D-64625 Bensheim (DE)
(74) Representative: Klunker . Schmitt-Nilson . Hirsch

(57) **Abstract**

A distribution member (8) for a liquid silicon rubber injection moulding machine, comprises a channel distribution network (36, 38, 44) for feeding liquid silicon rubber to a mould die. The liquid silicon rubber is vulcanized by heating the mould die to around 120°C, and heat must be prevented from flowing into feed pipes and nozzles (24, 26) of the distribution network to ensure that the injection fluid does not vulcanize within the feed channels (44). In conventional systems, the feed pipes (24) comprise a water-cooling circuit which renders the machine complicated, expensive and reduces reliability. This invention relates to provision of plastic heat insulating feed pipes and nozzles (24, 26) prevent overheating of the fluid in the channel (44). An advantageous characteristic of the plastic feed pipes (24, 26) is that the liquid silicon rubber does not bond thereto, whereby the contrary would be disadvantageous as fluid bonding to the inside of the channel (44) may vulcanize due to the reduced heat flow at the bonding surface. The feed pipes (24) can be provided with a reflective outer surface (45) and separated from plate members (20, 28, 32) by an air gap (50) to further reduce heat transfer.

The advantages of this invention are substantial reduction cost of the machine, easy and cheap replacement of nozzles and feed pipes and increased reliability.

## Description

This invention relates to a machine for injecting a liquid for moulding, the liquid requiring heating in the mould for hardening thereof (e.g. vulcanization of liquid silicon rubber), the invention relating more particularly to the liquid feed system.

In an injection moulding process, a liquid material is supplied via pipes to a mould cavity, injected with pressure into the mould cavity, and then hardened within the mould cavity to produce the desired moulded object. Certain material, such as many plastics, are heated to melt them into a liquid form allowing transportation and injection into the mould cavity, the mould dies then being cooled to re-solidify the melted plastic. Other materials for injection moulding are in the liquid form at room temperature, such as liquid silicon rubber, and can thus be transported at room temperature and injected into a mould die which is then heated to vulcanize the liquid. Such silicon rubbers are in fact often comprised of two liquid components that are mixed together in the machine prior to injection into the cavity, whereby the heating of the double component liquid accelerates greatly the chemical reaction therebetween.

In the latter moulding process, it is necessary to ensure that the liquid in the feed pipes remains sufficiently cool to prevent solidification therein. In prior art injection moulding machines, the mould dies are heated once the liquid silicon rubber has been injected therein, the heat being transmitted relatively rapidly into neighbouring parts of the machine, and in particular the injection nozzles and pipes. For this reason, the injection nozzle, which is a metallic component in conventional machines, must be cooled to ensure that vulcanization does not occur within the feed pipes and injection nozzle during the moulding process. An example of a conventional moulding machine is described in European patent 0 162 037 B1.

The requirement for a cooling circuit within the injection nozzles and around the feed pipes substantially complicates the injection machine, thereby increasing it's cost of production and maintenance, and decreasing it's reliability.

It would therefore be desirable to provide a less complicated and more reliable injection moulding machine for injecting liquids that are hardened by heating the injection mould die.

It is therefore an object of this invention to provide an injection moulding machine for temperature hardenable materials (for example liquid silicon rubber) that is simple, reliable and cost-effective.

It is a further object of this invention to provide an injection moulding machine without a cooling circuit in the liquid feed pipes and nozzles.

The objects of this invention have been achieved by providing an injection moulding machine for injecting liquid temperature hardenable material by heating of a mould die into which the liquid is injected, the machine having feed pipes and injection nozzles for feeding the liquid into the mould die, characterized in that the feed pipes and injection nozzles are made of a heat insulating material to prevent heat transfer therethrough from solidifying the liquid flowing within one or more channels of the feed pipe, without requiring the use of a cooling system around the feed pipes.

Preferred embodiments may include an insulative face plate against which the heated moulding die is pressed, the face plate mounted against a structural plate through which the feed pipes pass, whereby cavities through the structural and face plates are separated from the feed pipes by an air gap to further reduce the transmission of heat between the structural and face plates into the feed pipes. Further embodiments could include a reflective surface (e.g. metallized) on the exterior of the feed pipes to reduce transfer of heat thereinto by radiation. The insulative material of the feed pipes could be of plastic such as POM (Polyatcotalcopolymer) mixed with a graphite based dye, to which the liquid silicon rubber does not bond when vulcanized. The latter ensures that even if some of the liquid flowing along the surface of the channel starts to vulcanize, it will not bond to the wall of the channel. If liquid in the process of hardening does stick to the channel, the interface between the liquid and the channel will increase in temperature due to the liquid not flowing over that particular surface, leading to full vulcanization of the liquid. The latter could tend to restrict the pipes and possibly lead to total blockage of the channel altogether. This is particularly important at the injection nozzle proximate the heated die.

The preferred embodiment of this invention will now be described with reference to the figures, whereby;
Figure 1 is a simplified diagram of an injection moulding machine; and
Figure 2 is a cross-sectional view through part of the liquid feeding system of the machine.

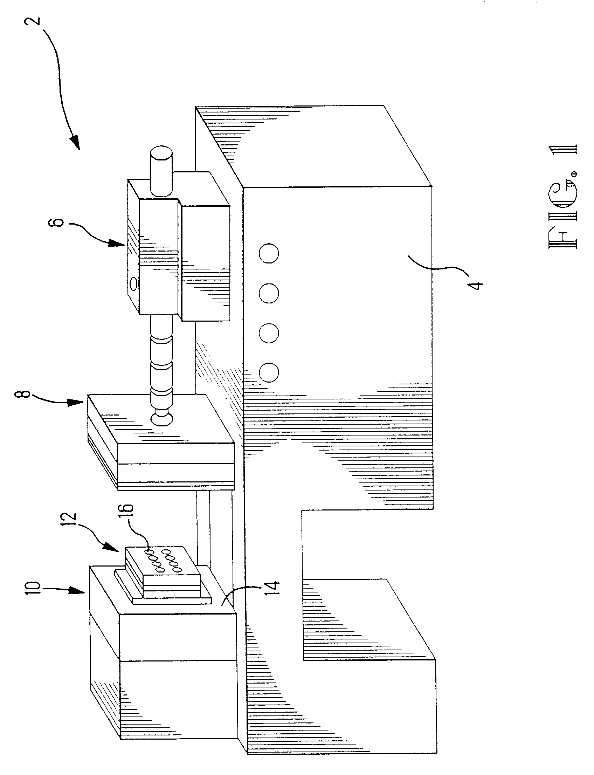

Referring first to Figure 1, a schematic representation of an injection moulding machine is shown at 2 and comprises a base structure 4 onto which is mounted an injection unit 6 which feeds moulding liquid to a distribution plate 8 also mounted on the base structure 4. A closing unit 10 is slidably mounted on the base structure 4 and has a mould die 12 mounted on a front face 14 facing the distribution member 8. The mould die 12 comprises moulding cavities 16 therein for receiving heat-hardenable moulding liquid such as liquid silicon rubber, which is then hardened by heating the mould die 12 which comprises heating elements therein, leading to vulcanization of the liquid silicon rubber.

The moulding process is as in conventional machines, whereby the moulding die 12 is pressed against the distribution member 8 where injection nozzles of the distribution member 8 are aligned with the cavities 16 of the mould die 12. The moulding liquid is then injected into the cavity 16, and the die 12 is then heated to vulcanize the liquid. Once solidified, the moulding die 12 can then be slid back from the distribution member 8 and the moulded objects in the die cavity 16 ejected therefrom. The cycle can then recommence.

During the injection heating process, there is quite a large heat transfer between the die 12 and the distribution member 8. In a conventional machine, the injection nozzles are cooled to ensure that they do not overheat and vulcanize the rubber within the nozzle or feed pipes. An example of the prior art is described in European patent 0 162 037 B1. The prior art thus requires a complicated (water) cooling circuit that complicates the machine, increasing it's cost and reducing it's reliability.

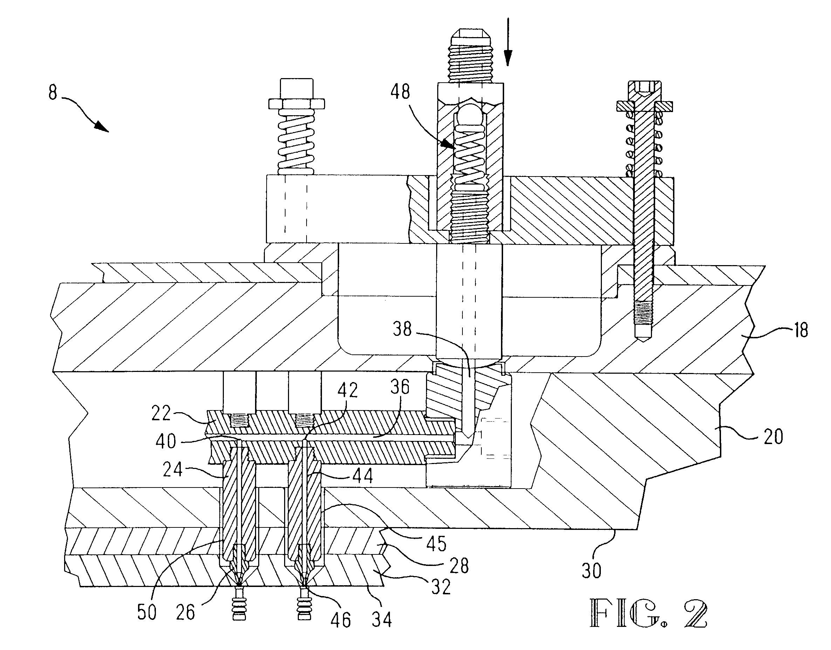

The distribution member 8 of the preferred embodiment of this invention, however solves this problem as will now be described with reference to Figure 2. The distribution member 8 comprises a base plate 18, and mounted thereto a distribution plate 20 comprising a distribution system 22 mounted therein and to which are connected feed pipes 24 having injection nozzles 26 at ends of the feed pipes. The distribution member 8 further comprises a heat insulating plate 28 contiguous a front face 30 of the distribution plate 20. Mounted against the insulation plate 28 is a face plate 32 comprising a front surface 34 against which the mould die 12 presses during injection of moulding liquid into the cavity 16.

The distribution system 22 comprises channels 36 therein that communicate with a central incoming feed channel 38 for distributing the injection liquid to positions 40, 42 aligned with the mould cavity 16. The feed pipes 24 are also in alignment with the mould cavity 16 and have feed channels 44 that interconnect the channels 36 to tips 46 of the injection nozzles 26 that are proximate the front face 34. The central feed channel 38 is connected at a rear end to the injection unit 6 and is fed by moulding liquid through a non-return valve 48.

The feed pipes 24 and the nozzles 26 are made of a heat insulating material, such as plastic (e.g. POM). Contrarily to prior art designs, the feed pipes 24 do not require a special cooling circuit as the insulative characteristics of the material considerably slow down the transfer of heat by conduction to the channel 44 where the injection liquid is flowing through. As the rate of heat transfer is substantially reduced, there is sufficient flow of injection liquid through the channel 44 to remove the heat that does flow to the channel 44 from the outside of the feed pipes. Heat is only transmitted when the moulding die is pressed against the front plate 32, the moulding die being heated to a temperature around 120°C or more for vulcanization of liquid silicon rubber. The liquid silicon rubber can support up to 60-80°C without vulcanizing. The insulative feed pipes 24 and nozzles 26 must therefore have sufficient insulative properties to ensure that the inner channel 44 is kept below 80°C. During the injection moulding process, heat transferred from the moulding die 12 to the distribution member 8, is restricted by the heat insulative plate 28 that is sandwiched between the front plate 32 and the distribution plate 20.

Heat transfer into the feed pipes 24 is further reduced by providing an air gap 50 between the plates 20, 28, 32 and the feed pipes 24. To further reduce heat transfer, in particular heat radiation, the outer surface 45 of the feed pipes 24 can be provided with a reflective surface (e.g. chrome plated). Heat transfer only occurs during the time that the mould die 12 is pressed against the front plate 32, and when the mould die is retreated from the front plate 32 to eject the moulded parts, the front plate 32 and other plates of the distribution member 8 cool down.

An advantageous characteristic of providing the feed pipes 24 in plastic material, apart from the very low costs, simplicity and easy replaceability, is that the liquid silicon rubber does not bond to POM (Polyatcotalcopolymer) mixed with a graphite-based die such that even if the vulcanizing and bonding process of the liquid within the channel 44 was to start, the liquid would not bond to the channel 44 and potentially cause blocking thereof. If the injection liquid were to bond to the walls of the channel 44, the liquid directly in contact with the wall of the channel 44 may rise in temperature due to the reduced extraction of heat because the liquid is not flowing, thereby vulcanizing and restricting the channel, or even leading to a blockage thereof. This is particularly important for the nozzles 26 that receive the greatest heat input and have small diameter channels therethrough.

Due to the simple design of the feed pipes 24 and nozzles 26, they can be very quickly and easily removed (e.g. by simply unscrewing them from the distribution system 22) and are very cheap to replace.

Advantageously therefore, the insulative feed pipes and nozzles, with anti-bonding characteristics for injection fluid, eliminate the need for active cooling thereof, therefore simplifying the design, and making it more cost-effective, reliable and easier to maintain. Furthermore, use of plastic feed pipes and nozzles make them cheap to replace.

## Claims

1. An injection moulding machine comprising a mould die (12) and a distribution member (8) for distributing liquid moulding material into the mould die (12) from an injection unit (6), the mould die (12) being heatable for solidification of the moulding material, the distribution member (8) comprising a distribution system (22) having one or more channels (36) therein for distributing the liquid moulding material from the injection unit (6) to one or more feed pipes (24), the one or more feed pipes (24) have channels (44) interconnecting the one or more distribution system channels (36) to injection nozzles (26) proximate a front face (34) contiguous the mould die (12) during injection of the liquid moulding material into the mould die (12), characterized in that the feed pipes (24) do not have an active cooling system and comprise heat insulative material for reducing the rate of heat transfer from the mould die (12) into the feed pipe channels (44) such that solidification of the moulding liquid is avoided.

2. The machine of claim 1 characterized in that the feed pipe (24) is made of a heat resistant plastic.

3. The machine of claims 1 or 2 characterized in that the feed pipe (24) has a reflective outer surface (45) for reducing radiation heat transfer thereinto.

4. The machine of any previous claim characterized in that the distribution member comprises a heat insulative plate (28) proximate the front face (34) for reducing heat transfer from the mould die (12) into the distribution member (8).

5. The machine of claim 4 characterized in that the insulative plate (28) is sandwiched between a front plate (32) that comprises the front fact (34), and a distribution plate (20) that houses the distribution system (22).

6. The machine of any preceding claim characterized in that the feed pipes (24) are separated from plates (32, 28, 20) of the distribution member (8) by an air gap (50) for reducing the rate of heat transfer between the plates (32, 28, 20) and the feed pipes (24) whereby the plates receive heat from the mould die (12) as they are positioned proximate thereto during the injection process.

7. The machine of any preceding claim characterized in that the injection nozzles (26) are also made of heat insulative material.

8. The machine of any preceding claim characterized in that the injection nozzles (26) are made of heat resistant plastic.

9. The machine of claim 2 or 8 characterized in that the plastic is POM (Polyatcotalcopolymer) mixed with a graphite-based dye, which inhibits bonding of the liquid moulding material such as liquid silicon rubber thereto.

10. The machine of any preceding claim characterized in that the feed pipes (24) are attached by screw threads to the distribution system (22), and can be easily unscrewed therefrom for removal or replacement.

11. The machine of any preceding claim characterized in that the injection nozzles (26) are screwed to the feed pipes (24) for rapid and easy removal or replacement.
